# EUROPÄISCHE PATENTANMELDUNG

(11) **EP 1 380 975 A1**
(43) Veröffentlichungstag der Anmeldung: **14.01.2004**
(21) Anmeldenummer: 02015260.9
(22) Anmeldetag: 09.07.2002
(51) Int. Cl.: G06F 17/60

(54) **EDV-System zur ggf. mehrjährigen Analyse und Steuerung von Geschäftssystemen und -prozessen mit einer beliebigen aber vorher fest definierten Komplexität bzw. Auflösung**

(71) Anmelder: Mischke, Gerald, 71384 Weinstadt-Endersbach (DE)
(72) Erfinder: Mischke, Gerald, 71384 Weinstadt-Endersbach (DE)

(57) **Zusammenfassung**

Jedes Geschäftssystem nach 4 Grunddimensionen (z.B. Quelle, Senke, Transaktion, Zeit bzw. Zeitraum) i.d.R. baustrukturiert gegliedert. Ergänzt wird diese durch eine flexible baumstrukturierte Anpassbarkeit dieses "allgemeinsten" an beliebige reale Geschäftssysteme, sowie durch ein "atomares" Datenerfassungs- und -speicherungsprinzip. Auf dieser Grundlage ist steht auch die modulare EDV-Systemarchitektur sowie die Ablaufkontrolle. Diese ermöglicht das Gesamtsystem beliebig zu partitionieren und ggf. in mehreren Teilsystemen parallel zu betreiben.

## Beschreibung

### Bezeichnung der Erfindung:

EDV-System zur ggf. mehrjährigen Analyse und Steuerung von Geschäftssystemen und -prozessen mit einer beliebigen aber vorher fest definierten Komplexität bzw. Auflösung.

### Technologiegebiet:

Die Erfindung bezieht sich auf eine Vielzahl von Verfahren und EDV-Systemen zur Analyse/Darstellung von Geschäftssystemen (Management Informationssysteme) und auf ein Computerprogramm-Produkt zur Durchführung des Verfahrens.

### Stand der Technik:

Management Informationssysteme (MIS) sind eine Erfindung der 60er Jahre. Nach dem Siegeszug der Rechenzentren wurde damals erstmals versucht, diese Technologie auch für die direkte Unterstützung des Topmanagements bei Strategie- und Führungsaufgaben heranzuziehen. Dieser Versuch war, ebenso wie der zweite Anlauf in den 80er bzw. Anfang der 90er Jahre (Executive Information Systems (EIS)) nicht von allzu viel Erfolg gekrönt.

Mit dem Aufkommen und der zunehmenden Verbreitung der sogenannten "Data Warehouse" (DWH-) Technik läuft derzeit die 3. Welle der Einführungsversuche von MIS. Dies geschieht im Schwerpunkt unter dem Begriff "Management Cockpit" auf Basis von modernster relationaler Datenbanktechnik in Kombination mit einer möglichst weitgehend automatisierten Integration und Aggregation von on-line verfügbaren Informationen über das betreffende Geschäftssystem. Die inzwischen weitgehend verfügbaren OLTP-Systeme, wie z.B. SAP, machen dies möglich. Sie ermöglichen so, eine neue Qualität des Einblicks in und des Überblicks über sogar sehr große, ggf. international vernetzte Geschäftssysteme zu erhalten.

### Mängel des Standes der Technik:

Der Hauptgrund des Scheiterns der klassischen MIS-Technologie bzw. solcher Ansätze/Versuche in den 60er, 80er und in den 90er Jahren Management-Entscheidungen und -Prozesse ebenfalls direkt durch EDV-Systeme zu unterstützen, liegt in dem sehr ungenügenden Formalisierungsgrad und in der z.T. sehr großen Varianz bzw. Variabilität von Management-Informationen, -Prozessen und -Begriffen.
Management-Entscheidungen und -Prozesse sind bis heute von ausgeprägten "Moden" sowohl der Begriffe als auch der Verfahren geprägt. Technische (Unterstützungs-) Systeme benötigen jedoch notwendig einen stabilen Begriffs-, Bezugs- und Prozessrahmen um vernünftig arbeiten und wirken zu können.

Ein weiterer entscheidender Nachteil liegt in der relationalen Datenbanktechnik selbst. Sie kann nur 2-stellige Prädikate (z.B. "x ist_Kind_von y") als Tabellen darstellen. Die Suchkomplexität und die Suchzeiten steigen exponentiell mit der Anzahl der Relationen bzw. Tabellen an. Jede Einführung einer weiteren Dimension, Gliederung bzw. Struktur wirkt deshalb erheblich auf die Performanz des Gesamtsystems zurück. Gerade für sehr schlecht strukturierte Domänen, wie z.B. bei Management-Unterstützungssystemen, ist dies eine ganz erhebliche Einschränkung. Diese Systeme zeichnen sich ganz besonders durch eine i.A. nicht überschaubare Vielzahl von möglichen und von den Kunden bzw. Anwendern ausdrücklich gewünschten bzw. benötigten Strukturierungsmerkmalen aus.

Zusätzlich dazu bietet der derzeitige Stand der Technik i.A. keinerlei Hilfe solche Geschäftssysteme sinnvoll und auch über eine längere Zeit stabil zu Gliedern. Bislang hat sich noch kein stabiles Gliederungsprinzip herauskristallisiert. Vielmehr werden die vielen möglichen Strukturierungsmerkmale von den EDV-Systemen, deren Entwicklern und Anbietern weitgehend gleichwertig behandelt. Dies erhöht unnötig die Gesamtsystemkomplexität, macht die Systeme langsam, unhandlich und häufig auch unwartbar.

### Technisches Problem:

Die eigentliche Problemstellung besteht darin für Geschäftssysteme eine stabile, allgemein gültige, einfache aber auch weitgehend universell anwendbare Grundgliederung zu entwickeln. Diese muß so gestaltet sein, daß sie leicht in eine entsprechende EDV-Unterstützungssystemarchitektur umgesetzt werden kann. Zusätzlich dazu muß ein auf diese (EDV-) Architektur aufbauendes geeignetes Ablaufsteuerungsprinzip gefunden werden. Es gilt dabei die vorher geschilderten Probleme der Vielseitig- und Vieldeutigkeit (wg. der Variabilität der Managementanforderungen), der exponentiellen Komplexitätszunahme und des zugehörigen Laufzeitverhaltens der EDV-Systeme sowie der Gesamtsystemkomplexität und -bedienbarkeit solcher Systeme aus Nutzersicht in den Griff zu bekommen.

### Problemlösung:

Der Erfindung liegen somit folgende Aufgaben für die Entwicklung eines EDV-Systems zur Managementunterstützung zugrunde:
1. Definition einer "allgemeinsten" Grundgliederung eines (jeden) Geschäftssystems und seiner EDV-Repräsentation.
2. Angabe einer zugehörigen Gliederung bzw. Architektur für ein entsprechendes unterstützendes EDV-System.
3. Definition eines Verfahrens bzw. einer Methode zur Anpassung dieses "allgemeinsten" Geschäftssystems an beliebige "reale" Geschäftssysteme beliebiger Komplexität.
4. Angabe einer Ablaufsteuerung und der entsprechenden Systemarchitektur für das zugehörige EDV-System

Zu 1) "allgemeinste" Grundgliederung Geschäftssystem:
Diese Aufgabe wird durch die strikte Einführung eines "Quelle-Senke-Leistung-Zeitraum" Prinzips gelöst. Durch dieses Prinzip ist es möglich, jedes Geschäftssystem und jeden Geschäftsvorgang in einen 4-Dimensionalen Ereignisraum abzubilden. In diesem Raum können Teilgebiete als ggf. optimale bzw. anzustrebende Zustandräume für das Geschäftssystem bzw. den Geschäftsvorgang zu identifiziert werden. Hierfür bedarf es der Definition einer geeigneten Metrik für diesen Ereignisraum. Ein Beispiel für eine solche Metrik ist die klassische G&V-Rechnung für Unternehmen oder die Plan-/Ist-Abweichung für einzelne Projekte/Vorhaben.

Zu 2) Architektur des unterstützenden EDV-Systems:
Die zweite Aufgabe wird durch die ebenso strikte Einführung eines "atomaren Datenerfassungsprinzips" auf Basis der obigen 4-dimensionalen Gliederung des Ereignisraumes/Geschäftssystems in Zusammenhang mit einer 5-Tabellen-Architektur des dahinter stehenden EDV-Systems erreicht. Jeweils eine Tabelle beschreibt und erfasst dabei Quelle, Senke und Leistung bzw. Leistungsklasse (z.B. F&E-Projekte) des Geschäftssystems. Diese 3 Tabellen stellen zusammen mit der Zeit bzw. dem Zeitraum sozusagen die 4 Grundkoordinaten des Geschäftssystems bzw. des "Ereignisraumes" dar. Eine weitere "Transaktionstabelle" beschreibt die jeweilige atomare Transaktion (z.B. den einzelnen Werkvertrag, das Arbeitspaket oder die individuelle Leistungserbringung) inklusive Zeitpunkt und Zeitraum der Transaktion. Diese Tabelle beschreibt, zusammen mit den "Grundkoordinaten" vollständig die zeitliche Veränderung des betrachteten Geschäftssystems. Last but not least beschreibt eine gesonderte, nach den Elementen der 3 "Grundkoordinaten" Quelle, Senke, Leistung (= Transaktionsklasse) gegliederte "Ressourcentabelle" die je Zeitabschnitt vorhandenen bzw. ggf. die auch bereits verfügten Ressourcen des Geschäftssystems. Alle diese Tabellen müssen atomar aufgebaut sein. Dies bedeutet, daß der kleinsten noch darstell- bzw. analysierbaren Einheit im Geschäftssystem auch zumindest 1 Zeile/Eintrag gewährt werden muß. Weiter sind die Spalteneinträge aller Tabellen strikt nach Struktur-/Zuordnungsinformation und nach den die "Koordinate" beschreibenden Bestands- bzw. Inhalts-Informationen getrennt.

Zu 3) Anpassung "allgemeinstes" an bel. Geschäftssysteme:
Die Atomare Datenerfassung, die 4-dimensionale Gliederung und die 5-Tabellenarchitektur mit Trennung von Struktur- und Bestandsinformation erlauben nun, bei wiederum strikter "Baumgliederung" jeder der 4 Koordinaten des Geschäftssystems, jedes beliebige reale Geschäftssystem beliebiger, aber baumartiger Struktur in diesem EDV-System darzustellen, zu analysieren und auch seine Veränderungen bzw. den Verlauf seiner Geschäftstätigkeit zu beschreiben. Hierfür wird wiederum das Prinzip der strikten Trennung von Zuordnungs- und Bestands- bzw. Inhaltsinformation benötigt. Erst dadurch ist es möglich durch entsprechende "Zuordnungsbäume'' die Aggregation von "atomaren" Einzelinformationen (z.B. Arbeitspakete oder Kostenstellen) sinnvoll und eineindeutig nachvollziehbar zu steuern. Des weiteren garantiert die Baumgliederung einer jeden "Geschäftssystemkoordinate" die eindeutige Repräsentation beliebiger hierarchischer Strukturen. Netze und "Hierarchiebrüche" können i.d.R. durch Einführen von "virtuellen" Zwischenknoten dennoch in Bäume aufgelöst und so beschrieben werden. Dieses Verfahren stellt somit den "allgemeinsten" Fall der EDV-technischen Beschreibung von nahezu beliebigen Geschäftssystemen dar.

Zu 4) Ablaufsteuerung und Gesamtarchitektur EDV-System:
Mit obigen Festlegungen wird nun eine systematische 2-stufige Gesamtsystemarchitektur und Ablaufsteuerung möglich. In einem ersten Schritt wird vom Navigationssystem, das sich auf die Baumstrukturen bzw. deren EDV-Repräsentationen (Adresstabellen, Zuordnungsrelationen, etc.)ein zu betrachtender bzw. zu analysierender Ausschnitt aus dem Geschäftsystem ermittelt und in einen bzw. mehrere 4-dimensionale (atomare) Adressvektore übersetzt. Mit diesen Adressvektoren werden aus dem EDV-Modell des Geschäftssysteme die entsprechenden Einträge aus den 5 Tabellen (Quelle, Senke, Leistung, Transaktion und Ressourcen) herausgeholt und in eine neue, der Analyseanfrage entsprechende Zwischenrepräsentation gebracht. Sinnvollerweise organisiert sich diese Zwischenrepräsentation (sozusagen das Gedächtnis bzw. der Zwischenspeicher der Anfrage) analog zur Architektur des EDV-Gesamtsystems. Auf diesem Zwischenspeicher können nun, ohne das Gesamtsystem und die gespeicherten Informationen zu stören, beliebig i.d.R. baumgesteuerte Aggregationen und Auswertungen der Daten gemacht werden. Für diesen Ablauf ist es völlig unerheblich, ob es für eine/mehrere der 4 "Koordinaten" bzw. "Dimensionen" des Geschäftssystems nur eine oder beliebig viele Gliederungen (z.B. nach Regionen, Zeitabschnitten, Produktgruppen, etc.) gibt.
Für eine beliebige Analyse bzw. Betrachtung eines wiederum beliebigen Geschäftssystems kann jedoch stets nur eine dieser Gliederungen als Grundlage dienen. Mehrfachsichten entstehen durch neben einander stellen mehrerer solcher Betrachtungen. Welche gewählt wird, ist aus Sicht des Systems völlig unerheblich, solange nur die vorher beschriebenen Prinzipien eingehalten werden.

Wie man leicht sieht, löst diese EDV- und Systemarchitektur alle eingangs beschriebenen Probleme des Standes der Technik. Darüber hinaus erhält man selbst bei beliebig vielfältigen Gliederungen des Geschäftssystems stets im wesentlichen das selbe Antwortzeitverhalten. Dieses ideale Antwortzeitverhalten entsteht, weil der eigentliche Suchaufwand für die entsprechenden Einträgen in der 5-Tabellen-Architektur des Geschäftsinformationssystems so unabhängig von der Geschäftssystemstruktur ist. Er bleibt somit weitgehend konstant.

Ein weiterer, in seiner praktischen Bedeutung nicht zu unterschätzender Vorteil der Erfindung ist, daß sie erlaubt Geschäftssysteme zu partitionieren. Diese Partitionen sind wiederum vollständige (Teil-) Geschäftssysteme im Sinne der Erfindung welche ggf. auch auf getrennten Teilsystemen, z.B. auf mehrfachen PC-Kopien dieser (Teil-) Geschäftssysteme gehalten, analysiert, betrachtet und bearbeitet werden können. Dies eröffnet neue Horizonte in der Modularität sowohl im Umgang als auch in der Behandlung/Bearbeitung von Geschäfts- und Managementinformationssystemen.

### Ausführungsbeispiel:

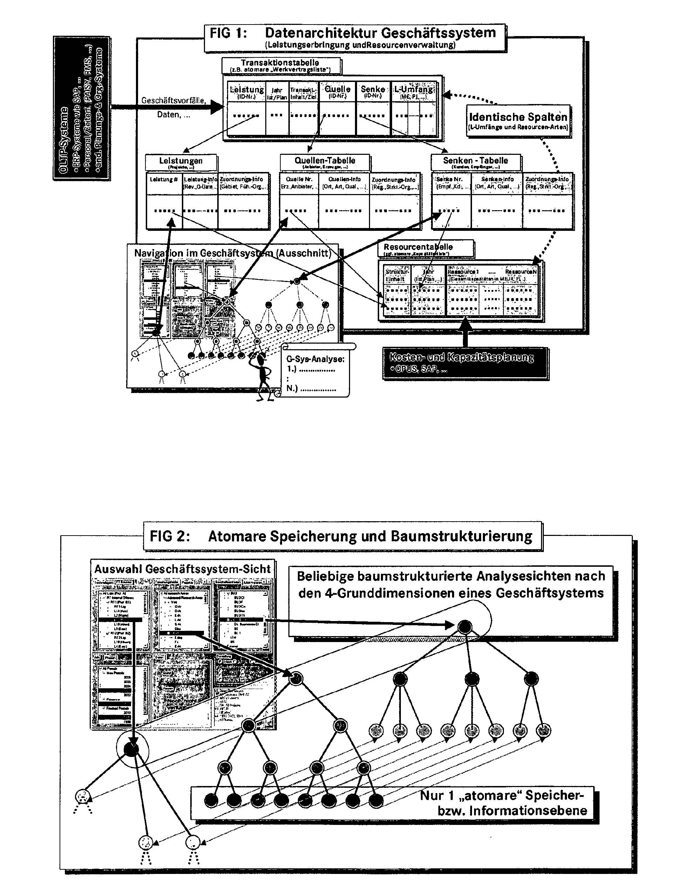

Die Erfindung wird anhand mehrerer Ausführungsbeispiele in den FIG 1 bis 6 näher erläutert, wobei die FIG 1 bis 6 Beispiele für die Tabellen- und die Geschäftssystemstruktur, für den 4-dimensionalen Datenwürfel sowie die zugehörige Analyse- und Ablaufsteuerung zeigen.

In den FIG wird veranschaulicht, wie die Strukturierung eines beliebigen Geschäftssystems in die beschriebenen 4 orthogonalen Grunddimensionen (Quelle, Senke, Leistung, Zeit) eine sehr einfache und komfortabel bedien- und benutzbare EDV-Repräsentation eines nahezu beliebigen Geschäftssystems (siehe FIG1) erlaubt. Diese Repräsentation und das zugehörige EDV-System zur Managementunterstützung weißt dadurch klare und einfach zu bedienende Schnittstellen zu den es ggf. on-line mit Daten versorgenden kaufmännischen und sonstigen EDV-Systemen des zu betrachtenden Geschäftssystems auf (siehe FIG1).

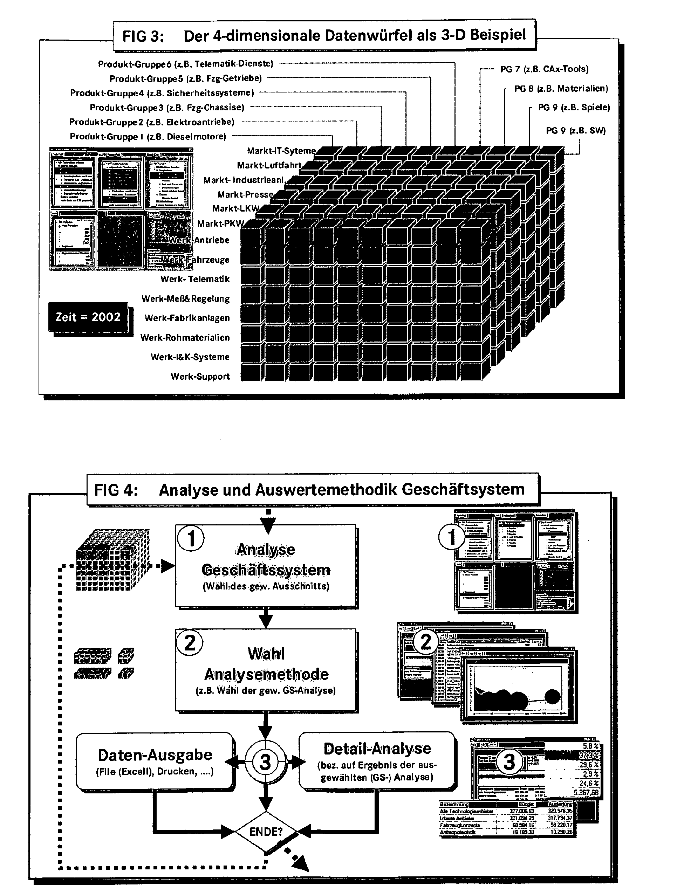

Ein ganz besonderer Charme dieser EDV- und Gesamtsystemarchitektur, die beliebige (Baum-) Strukturierbarkeit jeder der 4 Grunddimensionen eines Geschäftssystems, ist in FIG2 dargestellt. Sie ermöglicht die nahezu beliebige Anpassbarkeit dieser sehr einfachen, geradezu minimalen (EDV-) Repräsentation eines Geschäftssystems an reale Strukturierungsmerkmale (z.B. Direktion, Bereich, Abteilung, etc.). Diese Anpassung ist nicht nur auf die Firmenorganisation (z.B. als Koordinate "Quelle" der Leistung) allein beschränkt, sondern ebenso einfach für die Produkte bzw. Produktgruppen (z.B. als Koordinate "Leistung" bzw. "Transaktion") als auch für deren Kunden/Märkte (z.B. als Koordinate "Senke") möglich. Des weiteren ist dieser Mechanismus auch für die Koordinate "Zeit" möglich. Dies ermöglicht sehr einfach z.B. Perioden- oder Phasenbetrachtungen für ein beliebiges Geschäftssystem durchzuführen.

Die Einschränkung auf "Baumstrukturen" ist hierbei eigentlich kein Nachteil, sondern eher ein Vorteil. Sie schränkt wg. der Allgemeingültigkeit dieser Datenstrukturen die Strukturierungsfreiheit so gut wie gar nicht ein, erlaubt aber wg. der impliziten Partitionierung (siehe FIG2) des Betrachtungsraumes stets eine Konsistenz von Teil- und Gesamtsystembetrachtung herstellen zu können. Dies ist mit anderen Strukturierungsprinzipien i.A. nicht bzw. nicht einfach möglich.

Der größte Vorteil dieser Prinzipien ist aber die Trennung von atomarer Speicherebene und von Zuordnungs- oder Strukturierungsinformation (siehe FIG 1 und 2). Sie erlauben nicht nur eine Speicherplatzoptimale Speicherung der Informationen sondern sie gestatten auch reale und hypothetische Gliederungen eines Geschäftssystems gleich zu behandeln. Damit ermöglicht die Erfindung erstmals ohne Verlust an Allgemeingültigkeit noch an Geschwindigkeit bzw. an Nutzerfreundlichkeit reale und hypothetische Geschäftssystemgliederungen zu vergleichen und so das betreffende (reale) Geschäftssystem gezielt zu optimieren und die Folgen von Umorganisationen zu simulieren bzw. testen zu können.

Ein entsprechendes komfortables Navigationstool erlaubt dabei dem Nutzer, wie in FIG3 dargestellt, nach beliebigen realen oder hypothetischen Gliederungen stets die selbe 4-dimensionale Geschäftssystemwelt (den Datenwürfel) aus allen möglichen Sichten zu betrachten. Dies gilt ebenso für beliebige Teilsichten (siehe FIG3) und natürlich auch für deren nahezu beliebiger Aggregation zu ggf. neuen Teil- oder Gesamtsystemen. Die Erfindung stellt damit eine geradezu optimale "Simulationsumgebung" für die gezielte Strukturierung und Optimierung nahezu beliebiger Geschäftssysteme dar.

Diesem sehr einfachen Ablauf entspricht auch die Ablaufsteuerung der/einer Gesamtanalyse eines Geschäftssystems (siehe FIG 4). Der sehr modulare Aufbau der Erfindung trennt strikt zwischen Wahl der "Sicht auf das Geschäftssystem" und der eigentlichen Analyse des gewählten Ausschnitts selbst. Dieses Modularitätsprinzip ermöglicht beliebige Analyseverfahren und auch Bewertungsmetriken für den zu betrachtenden Ausschnitt heranzuziehen und somit auch miteinander zu vergleichen. Dies ist wiederum ein entscheidender Vorteil, da dadurch der Menge der zur Analyse bzw. zur Optimierung eines Geschäftssystems heranziehbaren Verfahren nur durch die Phantasie Grenzen gesetzt sind. Die Erfindung stellt somit so etwas wie den "allgemeinsten Geschäftssystemanalysator" dar. Dies ist gerade auf dem Gebiet der Managementinformationssysteme, ohne wirklich abgesicherte und allgemeingültige Steuer-, Mess-, Beurteilungs- und Optimierungsverfahren, ein entscheidender Vorteil.

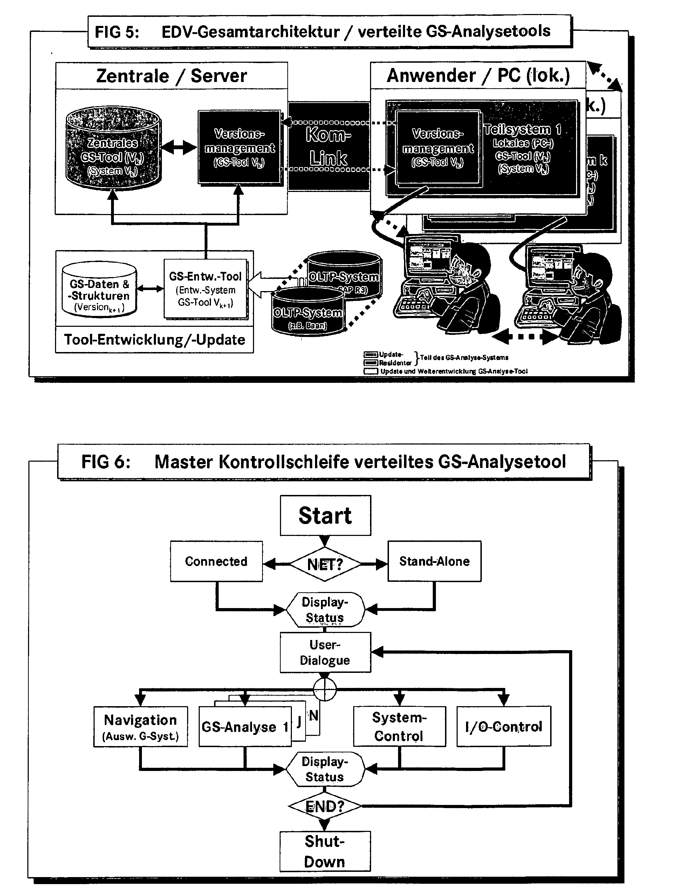

Die 4-dimensionale Grundgliederung, die atomare Datenerfassung und die baumgegliederte Strukturierung des Geschäfts- bzw. des EDV-Systems haben jedoch noch einen weiteren, für den praktischen Einsatz sehr hilfreichen und wichtigen (Modularisierungs) Vorteil. Sie erlauben das Gesamtsystem konsistent in Teilsysteme zu zerlegen und ggf. auch wieder zusammen zu führen. Dies wiederum erlaubt Ausschnitte eines Geschäftssystems in einer analogen Gliederung als autonome Teilsysteme zu betrachten und auch auf getrennten EDV-Geräten (z.B. PC-Systemen) zu bearbeiten, wie dies in FIG5 dargestellt wird. So wird sozusagen das MIS der Firma PC-tauglich und portabel. Für reine Analysezwecke stellt dies überhaupt kein Problem dar. Werden auch Daten verändert, so müssen vom Zentralsystem bzw. vom Systemverantwortlichen entsprechende Konfliktauflösungsmechanismen bzw.-algorithmen zur Verfügung gestellt werden. Der Bedienungskomfort und die Einsetzbarkeit steigen jedoch in jedem Falle erheblich. Dies gilt insbesondere im Vergleich zu den heute vorherrschenden Großrechnersystemen wie SAP etc.

Diesem Vorgehen und dieser Philosophie entspricht auch die in FIG6 dargestellte Ablaufkontrolle des Gesamtsystem. Sie erlaubt gleichberechtigt im Netz und "stand-alone" (ggf. auf einem PC bzw. Labtop) zu arbeiten. Ebenfalls sind mehrere Analysen parallel bearbeitbar, da ja jede auf ihren eigenen "Speicher" zurückgreifen kann. Dies ermöglicht bislang unbekannte Freiräume um mehrfache und vergleichende Analysen, z.B. über mehrere Jahre, durchzuführen (siehe FIG 4 und 6).

Das beschriebene Verfahren zur mehrjährigen Analyse und Steuerung von Geschäftssystemen kann als ein Computerprogrammprodukt direkt in den internen Speicher eines Computers geladen werden.

Das Verfahren liegt ebenfalls als ein Computer-Programmprodukt vor, welches auf einem computergeeigneten Medium gespeichert ist und computerlesbare Programmittel aufweist, die den Computer anweisen das Verfahren zur ggf. mehrjährigen Analyse und Steuerung von Geschäftssystemen durchzuführen (siehe FIG 4 bis 6).

### Figuren FIG 1 - 6:

**FIG 1** zeigt an einem Beispiel die beschriebene Datenarchitektur des Verfahrens. Es zeigt die wesentlichen Prinzipschnittstellen zu den bestehenden EDV-Systemen zur Planung und zum Controlling von Geschäftssystemen ebenso wie die Schnittstelle zum Navigationstool bzw. zu den Navigations- und Strukturdaten eines zugehörigen, erfindungsgemäßen EDV-Systems.

**FIG 2** zeigt als Prinzipskizze und als mögliche Bedienoberfläche die prinzipiellen Datenstrukturen des Navigationstools bzw. der Navigationstabellen sowie deren Verknüpfung mit der atomaren Speicherebene.

**FIG 3** zeigt, aus darstellungstechnischen Gründen, als eine 3-D-Datenauswahl nach Maßgabe einer bestimmten ausgewählten Teilsicht der Daten aus dem 3- bzw. 4-dimensionalen "Datenwürfel" eines Geschäftssystems (Quelle = Werke, Leistung = Produktgruppe, Senke = Märkte, Zeit = Jahr 2002 als "versteckter" Parameter).

**FIG 4** zeigt als Blockdiagramm einen typischen Analyseablauf für ein beliebiges Geschäftssystem. Die Nebenstehenden Bilder zeigen mögliche Auswahlmenüs bzw. Ergebnisse dieser Analyse.

**FIG 5** zeigt als Blockschema die/eine mögliche Konfiguration eines erfindungsgemäßen verteilten Informationssystems mit Zentral- und Entwicklungssystem.

**FIG 6** zeigt die für ein solches verteiltes Management Informationssystem mögliche bzw. notwendige Kontrollschleife bzw. Kontrollarchitektur.

## Patentansprüche

1. Verfahren zur ggf. mehrjährigen Analyse und Steuerung von Geschäftssystemen und -prozessen,
**dadurch gekennzeichnet, daß**
ein bzw. jedes zu betrachtende Geschäftssystem in genau 4 orthogonalen Grunddimensionen nach den Kategorien Quelle, Senke, Leistung bzw. Transaktion zwischen Quelle und Senke sowie Zeit bzw. Zeitraum oder in 4 analogen bzw. äquivalenten aber orthogonalen Kategorien beschrieben wird.

2. Verfahren nach Anspruch 1,
**dadurch gekennzeichnet, daß**
alle Daten des Geschäftssystems in jeder Grunddimension in einer tiefsten, atomaren Ebene erhoben und gespeichert werden.

3. Verfahren nach Anspruch 1 und 2,
**dadurch gekennzeichnet, daß**
für jede der 4 Grunddimensionen des Geschäftssystems beliebige aber bis auf eine tiefste, atomare Speicherebene vollständige baumstrukturierte Partitionen angegeben, eingerichtet und gespeichert werden bzw. werden können.

4. Verfahren nach einem der Ansprüche 1 bis 3
**dadurch gekennzeichnet, daß**
alle Informationen des und über das Geschäftssystem in 4, vornehmlich 5 bis 7 dedizierten Datenstrukturen (z.B. Tabellen) gespeichert werden, wovon jeweils eine für die 3 Grunddimensionen Quelle, Senke und Leistung vorgesehen ist, eine weitere Datenstruktur (Tabelle) den atomaren Transaktionen gewidmet wird und ggf. eine zusätzlich Datenstruktur (z.B. Ressourcentabelle) die Ressourcen in den 3 Grunddimensionen Quelle, Senke und Leistung erfasst, wobei diese Datenstruktur (Tabelle) ggf. auch in 3 dedizierte Teildatenstrukturen bzw. Teiltabellen, jeweils für Quelle, Senke und Leistung getrennt, aufgespaltet werden kann.

5. Verfahren nach den Ansprüchen 1 bis 3,
**dadurch gekennzeichnet, daß**
die Strukturinformation über die Gliederung des Geschäftssystems, also die Zuordnung der jeweiligen atomaren Informationseinheit des Geschäftssystems auf jeder der 4 Grunddimensionen Quelle, Senke, Leistung und Zeit/Zeitraum zu beliebigen übergeordneten Einheiten einer realen und/oder hypothetischen Gliederungen eines Geschäftssystems, in gesonderten Datenstrukturen, den 4 "Navigationstabellen", z.B. als Baumstruktur gespeichert wird.

6. Verfahren nach den Ansprüchen 4 und 5,
**dadurch gekennzeichnet, daß**
die atomaren Informationseinträge in den 4 bis 7 Datenstrukturen nach Anspruch 4 durch Rückverzeigerungseinträge in entsprechenden Zuordnungsstrukturen (z.B. Spalten), wo ggf. die Zuordnungen der betreffenden atomaren Einheiten zu den realen bzw. hypothetischen Struktureinheiten nach Anspruch 5 hierarchisch geordnet abgelegt sind, streng getrennt von den gespeicherten Inhalten des/eines zu analysierenden bzw. zu betrachtenden Geschäftssystems verknüpft werden können.

7. Verfahren nach den Ansprüchen 4 und 5,
**dadurch gekennzeichnet, daß**
die gespeicherten atomaren Informationen (Umfänge bzw. Art der Ressource, ...) in der bzw. in den Datenstrukturen (z.B. Ressourcentabellen) nach Anspruch 4 und die entsprechenden Informationen (Umfänge bzw. Art der Transaktion bzw. Leistung, ...) in der Transaktionstabelle nach Anspruch 4 von der selben Art bzw. Kategorie (z.B. Euro, Mannjahre, etc.) sind.

8. Verfahren nach den Ansprüchen 4, 5 und 7,
**dadurch gekennzeichnet, daß**
die gespeicherten atomaren Informationen (Umfänge bzw. Art der Ressource bzw. Transaktion) vollständig in den entsprechenden Datenstrukturen (z.B. in den Ressourcen- bzw. Transaktionstabellen) nach Anspruch 4 gespeichert werden, so daß jederzeit der Verlauf und der Verfügungszustand der entsprechenden Ressource durch ein entsprechendes Kalkulationsprogramm ermittelt werden kann.

9. Verfahren nach den Ansprüchen 4 und 5,
**dadurch gekennzeichnet, da**ß
ein besonderes Navigationstool im Dialog mit dem Nutzer auf Basis der Datenstrukturen nach Anspruch 5 die Auswahl des zu analysierenden und ggf. mehrjährig zu betrachtenden Ausschnitts des/eines gespeicherten Geschäftssystems, alle für die Analyse/Betrachtung relevanten atomaren Informationseinheiten nach den Ansprüchen 2 bis 4 identifiziert und einem entsprechenden (Unter- bzw. Teil-) Programm zur Extraktion und zur geeigneten Aggregation der entsprechenden Informationen übergibt.

10. Verfahren nach den Ansprüchen 4, 5 und 9,
**dadurch gekennzeichnet, daß**
die für die Beantwortung einer beliebigen Anfrage bzw. Analyseaufgabe notwendigen Informationen in den Datenstrukturen bzw. in den Tabellen nach Anspruch 4 nicht gesucht werden müssen, sondern die Adressen Ihrer Speicherplätze, aus den Angaben des Navigationstools nach Anspruch 9 bzw. aus den in den Datenstrukturen (z.B. den "Navigationstabellen") nach Anspruch 5 gespeicherten Informationen, berechnet werden können und so auf die Informationen direkt zugegriffen werden kann.

11. Verfahren nach den Ansprüchen 1 bis 3 und einem oder mehreren der Ansprüche 4 bis 10,
**dadurch gekennzeichnet, daß**
das Gesamtsystem mittels der in den Datenstrukturen (z.B. den "Navigationstabellen") nach Anspruch 5 abgelegten Struktur- bzw. Zuordnungsinformationen in beliebige dem Gesamtsystem strukturähnliche Teilsysteme, die ggf. in getrennten EDV-Systemen bearbeitet und verwaltet werden können, aufgeteilt und ggf. auch wieder, ggf. unter Zuhilfenahme von geeigneten Konfliktauflösungsmechanismen bzw. -systemen, zu einem konsistenten Gesamtsystem zusammengefügt werden kann.

12. Verfahren nach einem der Ansprüche 1 bis 11,
**dadurch gekennzeichnet, daß**
ein oder mehrere aufeinander aufbauende und kooperierende EDV-gestützte Berichts-, Analyse- und Entwicklungs- bzw. Integrationstools den gesamten Ablauf überwachen und steuern.

13. Computerprogramm-Produkt, das direkt in den internen Speicher eines Computers geladen werden kann und Softwareabschnitte umfaßt, mit denen ein Verfahren zur ggf. mehrjährigen Analyse und Steuerung von Geschäftssystemen nach einem der Ansprüche 1 bis 12 durchgeführt wird.

14. Computerprogramm-Produkt, das auf einem Computer geeigneten Medium gespeichert ist und computerlesbare Programmittel aufweist, die den Computer anweisen ein Verfahren zur ggf. mehrjährigen Analyse und Steuerung von Geschäftssystemen nach einem der Ansprüche 1 bis 12 durchzuführen.
